# EUROPEAN PATENT SPECIFICATION

(11) **EP 4 047 042 B1**
(45) Date of publication and mention of the grant of the patent: **10.09.2025**
(21) Application number: 22156826.4
(22) Date of filing: 15.02.2022
(51) Int. Cl.: C08K 3/22, C08L 63/00, C08K 9/04, C08J 3/20

(54) **METHOD FOR PRODUCING A COMPOSITE STRUCTURE COMPRISING MAGNETIC FILLER MATERIAL EMBEDDED IN A RESIN MATRIX**
VERFAHREN ZUM PRODUZIEREN EINER VERBUNDSTRUKTUR AUS EINEM IN EINER HARZMATRIX EINGEBETTETEN MAGNETISCHEN FÜLLMATERIAL
PROCÉDÉ DE PRODUCTION D'UNE STRUCTURE COMPOSITE COMPRENANT UN MATÉRIAU DE REMPLISSAGE MAGNÉTIQUE INTÉGRÉ DANS UNE MATRICE DE RÉSINE

(30) Priority: 18.02.2021 FI 20217034
(43) Date of publication of application: 24.08.2022
(73) Proprietor: Teraloop OY, 00180 Espoo (FI)
(72) Inventor: Lundahl, Meri, 02120 Espoo (FI); Merilä, Markus, 00200 Helsinki (FI); de Rozieres Gentilhomme de Laveline, Maximillian, 02130 Espoo (FI)
(74) Representative: Papula Oy

(56) References cited:
- CN-A- 1 645 525
- JP-A- 2005 347 449
- JP-A- 2008 147 403
- JP-A- 2019 182 950
- JP-A- 2020 163 833
- US-A1- 2017 275 438
- US-A1- 2020 413 542
- DATABASE WPI Week 200605, 15 December 2005 Derwent World Patents Index; AN 2006-042249, XP002806818
- DATABASE WPI Week 201986, 24 October 2019 Derwent World Patents Index; AN 2019-88358G, XP002806819
- DATABASE WPI Week 202008, 8 October 2020 Derwent World Patents Index; AN 2020-97953C, XP002806820
- DATABASE WPI Week 200602, 27 July 2005 Derwent World Patents Index; AN 2006-011576, XP002806821
- DATABASE WPI Week 200864, 26 June 2008 Derwent World Patents Index; AN 2008-K75817, XP002806822

## Description

### FIELD OF THE INVENTION

The present invention relates to a method for producing a composite structure comprising a magnetic filler material embedded in a resin matrix. The present invention further relates to the composite structure. Still further, the present invention relates to the use of the composite structure.

### BACKGROUND TO THE INVENTION

A plastic material can be made magnetically active by incorporating magnetic fillers, such as magnetic particles or magnetically modified fibers. However, a balance between sufficient magnetic performance and mechanical fatigue resistance, for applications involving cyclic strains of hundreds of thousands of cycles, has not yet been achieved. This is largely due to the poor compatibility between metallic and plastic surfaces. Plasma treatment of the particle surface to improve the adhesion in polymer-bonded magnets has not been reported.

Patent Document JP 2019 182950 A relates to molding materials comprising a resin, a magnetic material powder, which molding material having excellent magnetic properties and less molding defects as well as improved moldability and is used for a reactor of an automobile, an inductor and a motor magnet fixing material.

### PURPOSE OF THE INVENTION

The present invention improves the filler-matrix interfacial compatibility by subjecting the magnetic fillers to surface treatments, such as plasma treatment and/or coating for improving the adhesion of the magnetic filler material to the resin matrix in the composite structure. Further, a composite structure comprising magnetic filler material embedded in a resin matrix obtainable by the method as disclosed in the current specification is disclosed. This kind of composite structure is used in applications requiring both magnetic properties and resistance to mechanical fatigue.

### DESCRIPTION OF THE INVENTION

A method for producing a composite structure comprising magnetic filler material embedded in a resin matrix is disclosed. The method may comprise:
- providing the magnetic filler material; material wherein the magnetic filler material is a hard magnetic filler material selected from a group consisting of Nd, Nd₂Fe₁₃CoB, Nd₇Fe₄B₃, SmCo₅, Sm₂Co₇, Sm₂Co₁₇, Fe₂O₅Sr₂, SrFeO₂, SrFeO₃, SrFe₁₂O₁₉, BaFe₁₂O₁₉ and any mixtures thereof or a soft magnetic material selected from a group consisting of Fe, Co, Ni, mu-metal such as Ni₇₇Fe₁₇Cu₅Mo, Ni₇₆Fe₁₇Cu₅Cr₂, or Ni₈₁Fe₁₆Mo₃, Ni₄Fe, Ni₃Fe, CoNi, Co₂Ni₃, Co₃Ni₂, Co₄Ni, FeCo, Fe₇Co₃, Fe₅₁Co₄₉, Fe₅₁Co₄₇V₂, Co₈FeNi, NiFe₂O₄, CoFe₂O₄, MnZnFe₄O₈, or NiZnFe₄O₈;
- subjecting the provided magnetic filler material to a surface treatment for improving the adhesion of the magnetic filler material to the resin matrix in the composite structure, wherein the surface treatment is selected from plasma treatment and/or coating of the magnetic filler material;
- mixing the surface treated magnetic filler material with the resin to form a composite composition, wherein the composite composition comprises magnetic filler material in an amount of at least 10 volume-% based on the total volume of the composite composition; and
- allowing the composite composition to cure to form the composite structure.

Further, a composite structure comprising magnetic filler material embedded in a resin matrix obtainable by the method as disclosed in the current specification is disclosed.

Still further, the use of the composite structure in applications requiring lightweight materials with magnetic properties and resistance to mechanical fatigue is disclosed.

As used herein, the terms "composite composition" or "composite" refer to a material comprising resin matrix and a magnetic filler material. If the cured composite structure comprises a reinforcing component such as carbon fiber, it may also be referred to as "reinforced plastic". In one embodiment, the composite composition comprises a magnetic fiber to form a reinforced plastic.

As used herein, the term "resin matrix" refers to the plastic component of the composite composition or the composite structure in either its cured or uncured form. As used herein, the term "resin" refers to the uncured form of the resin matrix. In the cases when hardeners are needed to induce the curing (thermoplastic resins), the term "resin" refers to the main component of the system (excluding hardener). Hardener can be added to the thermoset resin before or after the addition of magnetic fillers and/or other additives.

The resin matrix can be made magnetically active by incorporating magnetic filler material(s), such as magnetic particles or magnetically modified fibers therein. The resin matrix may be thermoplastic or thermoset. A surface treatment, such as coating or plasma treatment, may be applied onto the magnetic filler material in order to ensure adhesion with the plastic medium.

In one embodiment, the composite structure comprising the magnetic filler material embedded in a resin matrix exhibits high fatigue performance, intrinsic recyclability, or both.

The magnetic filler material may be provided using one of several methods known to a person skilled in the art. The magnetic filler material may be prefabricated, acquired commercially, or prepared during the method for producing the composite structure comprising magnetic filler material embedded in a resin matrix.

The magnetic filler material may be manufactured using any method known to a person skilled in the art. Such methods include, but are not limited to, co-precipitation, thermal decomposition, micro-emulsion synthesis, hydrothermal synthesis, and sono-chemical synthesis.

In one embodiment, the magnetic filler material is prepared by co-precipitation, thermal decomposition, micro-emulsion synthesis, hydrothermal synthesis, or sono-chemical synthesis in a solution of complexing agent to simultaneously provide the magnetic filler material with a surface treatment.

Without wishing to be bound by any particular theory, it may be considered that the adhesion of the resin matrix to the magnetic filler material may be dependent on the difference in surface energies of these two materials. The surface energies of magnetic filler materials and resins matrices are typically radically different, which may limit their interfacial adhesion. For example, the surface energy for a typical epoxy resin is approx. 46 mJ/m², while it is 1357 mJ/m² for Fe₂O₃ or 1770 mJ/m² for Ni. Due to this difference in surface energies, achieving good adhesion between the magnetic filler material and the resin matrix may be challenging. Plasma and coating treatments may decrease the surface energy of the magnetic material by introducing new chemical groups, such as hydroxyl, carboxyl, amine or alkyl groups. Thus, the difference in surface energies between the attached materials is reduced and thus the adhesion improved.

Furthermore, the chemical groups introduced during plasma treatment and/or coating may be selected so that they are able to chemically crosslink with the resin matrix. For example, if using an epoxy resin with a curing mechanism between epoxide and amine groups, amine groups can be introduced on the magnetic filler surface so that those also participate the curing with the epoxide groups in the epoxy. This creates a covalent bond between the filler surface and the surrounding resin, thus strengthening their adhesion.

When coating is used, a coating material may be chosen with chemical similarity with the resin matrix. The coating material can also be or contain a metal chelator or other agent that decreases the surface energy of the metal, a metal oxide, or a metal alloy surface and/or complexes between the surface and the resin. The coating material may be citric acid, malic acid, glutaric acid, tartronic acid, tartaric acid, mesoxalic acid, or oleic acid; any amino acid or phthalocyanine; or a compound containing both a hydroxyl (for affinity with the metal) and an amine group (for affinity with the resin matrix, can also be cured as part of the resin), e.g. ethanolamine, diethanolamine, or triethanolamine; or amines containing at least two amino groups, such as 3-aminomethyl-3,5,5-trimethylcyclohexylamine (i.e., isophoronediamine), polyoxypropylenediamine m-phenylenebis(methylamine), 4-methylcyclohexane-1,3-diamine, 2-methylcyclohexane-1,3-diamine, diethylene triamine, triethylene tetramine, tetraethylene pentamine, dipropylene triamine, diethylamino propylamine, N-aminoethylpiperazine, isophoronediamine, xylylenediamine, metaphenylene diamine, diaminodiphenylmethane, diaminodiphenylsulfone polyamides, polyphenols, organic acids, isocyanates, polymercaptans, or any mixtures thereof.

In one embodiment, the surface treatment is a plasma treatment performed by exposing the magnetic filler material to plasma to generate bondable chemical groups (e.g. epoxy, amine, or hydroxyl) on the surface of the magnetic filler material. The plasma may be generated from air, oxygen, hydrocarbons (e.g. ethylene or propylene), alcohol(s) (e.g. ethanol or propanol) or from other gases, which can generate bondable chemical groups (e.g. epoxy, amine, or hydroxyl) on the surface of the magnetic material , or from a combination of any of the above. During the plasma exposure, the magnetic filler material may be mixed in any suitable way such as stirred, shaken, blown, or turned in order to ensure even surface coverage of the treatment. The treatment time may be adjusted according to the specific surface area of the filler magnetic material and may be at least 20 min/m², at least 25 min/m², or at least 30 min/m².

The surface area of the magnetic filler material may be determined by with sieves (e.g., particles that pass through a mesh screen with 2500 sieve openings per linear inch (2500 mesh) have a diameter of <5 µm), or through a BET measurement (Braunauer-Emmet-Teller surface area), or by imaging. In the case of powder with (approximately) spherical particles the surface area of the particles may be determined e.g. with electron microscopy and the average radius (rₚ) of the spheres determined based on the images. Knowing the volume of the particles to be modified (Vₚ), this total volume can be approximated to consist of n spheres with the average radius rₚ. This approximation allows calculating the total particle surface area as Aₚ = n * 4πrₚ², where n = 3Vₚ / (4πrₚ³). In the case of more complex shapes, image analysis techniques can be used to determine the surface area and volume of the particles. In the case of magnetically coated fibers with an (approximately) circular cross-section, the average fiber radius (r_{f}) can be determined based on electron micrographs. Knowing the volume of the fibers to be modified (V_{f}), this total volume can be approximated as a circular rod with length L and radius r_{f}. This approximation allows calculation of the total fibre surface area as A_{f} = L * 2πr_{f}, where L = V_{f} / (πr_{f}²).

In one embodiment, the bondable groups generated on the surface of the magnetic filler material by the plasma treatment may be e.g. epoxy-bondable, or amino-bondable, or hydroxy-bondable. In one embodiment, the bondable groups generated on the surface of the magnetic filler material by the plasma treatment may be e.g. epoxy, or amino, or hydroxy.

In one embodiment, the surface treatment is the application of a coating on the magnetic filler material by immersing the magnetic filler material in a solution comprising a complexing agent or by preparing the magnetic filler material in the presence of a complexing agent. As used herein, the term "complexing agent" refers to a chemical compound that can form a complex with the surface of the magnetic filler material thus facilitating adhesion of the magnetic filler material to the resin matrix on curing. In one embodiment, the complexing agent is selected from a group consisting of citric acid, malic acid, glutaric acid, oleic acid, and phthalocyanine.

Coating can be applied by immersing the magnetic filler material into a complexing solution comprising a complexing agent such as citric acid, malic acid, glutaric acid, oleic acid, phthalocyanine, or any mixture or combination thereof in a solvent such as water, supercritical carbon dioxide, supercritical water, an organic solvent, or any mixture or combination thereof. As a non-limiting example, Fe₃O₄ particles or Fe₃O₄-coated fibers can be immersed in a solution of citric acid, malic acid, glutaric acid, or oleic acid, or phthalocyanine in a solvent such as water, supercritical carbon dioxide, supercritical water or an organic solvent. The molar ratio of Fe : Fe-complexing group (carboxylate or hydroxyl) can be at least 1:1 (containing an excess amount of complexing agent). Where needed, the amount of complexing agent and the ratio of complexing agent to magnetic filler material can be adjusted e.g. depending on the particle size. An increase in the particle size decreases the amount of complexing agent required in relation to the amount of magnetic filler material. If the particle size is large, the ratio can be as high as 400:1. After stirring the mixture for at least 10 min, e.g. for 30 min, the excess complexing agent is washed away, leaving behind only the agent that has complexed on the filler surface.

Alternatively, the coating can be applied during the filler preparation by exposing the filler to the complexing agent during or after the precipitation of the magnetic particles or deposition of the magnetic coating. The filler and agent should be allowed at least 10 min, or at least 15 min, or at least 20 min, or at least 25 min, or at least 30 min to complex, after which the excess complexing agent is removed by washing.

A coated magnetic filler material (separately coated prefabricated fillers or fillers coated in the process of their preparation) may be dried or used as a dispersion. If used as a dispersion, the solvent can be exchanged, e.g. to an organic solvent. The solvent can be selected so that it is fast to dry, if the fillers are subsequently dried. Alternatively, the solvent can be selected so that it is miscible with the resin in which the magnetic filler material is going to be mixed. If this approach is selected, the desired resin matrix or a chemically related one can be mixed into the dispersion in an amount that is 5-15 weight-% of the solvent mass. The solvent content of the magnetic filler material may be less than 1 weight-%, or 0.3-0.5 weight-% of the total weight of the composition. After stirring the mixture for at least 10 min, or at least 20 min, or at least 30 min, the magnetic filler material may be (partially) dried in an oven and/or vacuum.

In one embodiment, the method comprises mixing the surface treated magnetic filler material with the resin to form a composite composition. In one embodiment, the method comprises mixing the surface treated magnetic filler material with a thermoset resin and a hardener to form a composite composition.

As used herein, the term "hardener" refers to a chemical substance added to the resin to initiate the curing or hardening of said resin into a cured resin matrix. The hardener may be e.g. an anhydride, an amine, a polyamide, a polyphenol, an organic acid, an isocyanate, a polymercaptan, or any mixtures thereof.

In one embodiment, the composite composition comprises magnetic filler material in an amount of at least 20 volume-%, or at least 30 volume-%, or at least 35 volume-%, or at least 40 volume-%, or at least 45 volume-%, or at least 50 volume-% based on the total volume of the composite composition. In one embodiment, the composite composition comprises magnetic filler material in an amount of at least 75 weight-%, or 80 weight-%, or 82.5 weight-%, or 85 weight-%, or 87.5 weight-%, based on the total weight of the composite composition.

In one embodiment, the composite composition comprises magnetic filler material in an amount of 20 - 70 volume-%, or 30 - 60 volume-%, or 45 - 55 volume-% based on the total volume of the composite composition.

In one embodiment, the composite composition comprises magnetic filler material in an amount of at least 60 weight-%, or at least 75 weight-%, or at least 80 weight-%, or at least 82.5 weight-%, or at least 85 weight-%, or at least 87.5 weight-%, based on the total weight of the composite composition. In one embodiment, the composite composition comprises a magnetic filler material in an amount of 40 - 95 weight-%, 75 - 91.3 weight-%, or 85 - 90 weight-% based on the total weight of the composite composition.

In one embodiment, the magnetic filler material is selected from a group consisting of hard magnetic materials and soft magnetic materials.

As used herein, the term "hard magnetic material" refers to materials that retain their magnetism after being magnetized. The term "permanent magnet" may also be used synonymously to "hard magnetic material". The selection of the hard magnetic material depends on the magnetic properties required by the intended application; for example, the required temperature stability.

The hard magnetic material is selected from a group consisting of Nd, Nd₂Fe₁₃CoB, Nd₇Fe₄B₃, FeₓO_{y}Sr_{z}, BaₓFe_{y}O_{z}, SmCo₅, Sm₂Co₇, Sm₂Co₁₇, Fe₂O₅Sr₂, SrFeO₂, SrFeO₃, SrFe₁₂O₁₉, BaFe₁₂O₁₉, and any mixtures thereof.

As used herein, the term "soft magnetic material" refers to materials that are easily magnetized and demagnetized. The selection of the soft magnetic material depends on the applied surface compatibilization method.

Non-limiting examples of soft magnetic materials include iron, nickel, other transition metals, or mu-metal as well as alloys of the above.

The soft magnetic material is selected from the group consisting of Fe, Ni, Co, mu-metal (such as Ni₇₇Fe₁₇Cu₅Mo, Ni₇₆Fe₁₇Cu₅Cr₂, or Ni₈₁Fe₁₆Mo₃), Ni₄Fe, Ni₃Fe, CoNi, Co₂Ni₃, Co₃Ni₂, Co₄Ni, FeCo, Fe₇Co₃, Fe₅₁Co₄₉, Fe₅₁Co₄₇V₂, Co₈FeNi, NiFe₂O₄, CoFe₂O₄, MnZnFe₄O₈, or NiZnFe₄O₈. In one embodiment, the soft magnetic material is Fe₃O₄.

As used herein, the term "mu-metal" refers to a soft ferromagnetic nickel-iron alloy. Mu-metal may be e.g. ASTM A753 Alloy 4 comprising approximately 77 % nickel, 16 % iron, 5 % copper, and 2 % chromium or molybdenum, or other suitable composition known to a person skilled in the art.

In one embodiment, the surface treatment is a plasma treatment or supercritical fluid treatment and the soft magnetic material is selected from a group consisting of Fe, Co, Ni, mu-metal (such as Ni₇₇Fe₁₇Cu₅Mo, Ni₇₆Fe₁₇Cu₅Cr₂, or Ni₈₁Fe₁₆Mo₃), Ni₄Fe, Ni₃Fe, CoNi, Co₂Ni₃, Co₃Ni₂, Co₄Ni, FeCo, Fe₇Co₃, Fe₅₁Co₄₉, Fe₅₁Co₄₇V₂, Co₈FeNi, NiFe₂O₄, CoFe₂O₄, MnZnFe₄O₈, or NiZnFe₄O₈.

In one embodiment, the surface treatment is coating the magnetic filler material with a complexing agent and the soft magnetic material is selected from a group consisting of an alloy where the oxidation state of iron is +II or +III, or where both +II and +III are present, e.g. Fe₃O₄, Fe, Ni, Co, mu-metal (such as Ni₇₇Fe₁₇Cu₅Mo, Ni₇₆Fe₁₇Cu₅Cr₂, or Ni₈₁Fe₁₆Mo₃), Ni₄Fe, Ni₃Fe, CoNi, Co₂Ni₃, Co₃Ni₂, Co₄Ni, FeCo, Fe₇Co₃, Fe₅₁Co₄₉, Fe₅₁Co₄₇V₂, Co₈FeNi, NiFe₂O₄, CoFe₂O₄, MnZnFe₄O₈, or NiZnFe₄O₈. Especially when using an agent that complexes with the metal via an amine group (or agent with only one complexing group), the soft magnetic material can also be Co, FeCo, Fe₇Co₃, Fe₅₁Co₄₉, Ni₄Fe, Ni₃Fe, CoNi, Co₂Ni₃, Co₃Ni₂, Co₄Ni, Ni₈₁Fe₁₆Mo₃, Co₈FeNi, Fe₅₁Co₄₇V₂. In one embodiment, the soft magnetic material is selected from the group consisting of Fe₃O₄, NiFe₂O₄, CoFe₂O₄, MnZnFe₄O₈. In one embodiment, the soft magnetic material is Fe₃O₄.

The surface treated magnetic filler material is mixed with a resin to form a composite composition. In one embodiment, the resin comprises or consists of a thermosetting resin or a thermoplastic resin. The resin can be thermoplastic (e.g., polypropylene, polyethylene, polyamide such as Nylon-12, thermoplastic polyimide, polyether imide, polyether ether ketone, polyphenylene sulfide, thermoplastic polyurethane, thermoplastic polyester, thermoplastic acrylic, polyolefin, polycarbonate, phenyl formaldehyde, fluorosilicone, polyvinyl chloride, polyvinylidene chloride, or a copolymer or combination of two or more of the above), or thermoset (e.g. epoxy or other polyepoxide, silicone, polyol such as C₁₂H₂₀O₆, thermoset polyurethane, vinyl ester, phenoplast, aminoplast, thermoset acrylic, melamine, thermoset polyimide, thermoset unsaturated polyester, thermoset saturated polyester, or a copolymer or combination of two or more of the above).

The epoxy resin may be selected from a group containing diglycidyl ether of bisphenol A or F, novolac-type epoxies, cycloaliphatic epoxy such as 3,4-epoxycyclohexylmethyl 3,4-epoxycyclohexylcarboxylate, a diepoxide in which the two epoxy groups are connected via an acyclic acetal group, e.g. acetaldehyde bis-(3,4-cyclohexylmethyl) diepoxide, diglycidyl ether of tetrabromobisphenol A, hydroquinone, (poly)ethylene glycol, (poly)propylene glycol, butylene glycol, polytetramethylene glycol, 1,4-butanediol, 1,6-hexanediol, cyclohexanedimethanol, resorcinol, neopentyl glycol, bisphenol A polyethylene glycol, bisphenol A polypropylene glycol, tetraglycidyl methylene dianiline, tetraglycidyl ether of pentaerythritol, diglycidyl ester of terephthalic acid, poly (glycidyl acrylate), poly (glycidyl methacrylate), epoxidized polyunsaturated fatty acids, epoxidized vegetable oils, epoxidized fish oils, epoxidized limonene, epoxidized polybutadiene, and any mixture thereof.

In one embodiment, allowing the composite composition to cure comprises subjecting the composite composition to exposure to a hardener, heating, irradiation with UV or visible light, or exposure to a solvent. If the composite is allowed to cure by subjecting it to heating, heating may be accomplished in one of several ways. Non-limiting examples of ways to accomplish heating of the composite composition are convection, radiation such as infrared / microwaves, contact with a heated mold, electromagnetic induction, or plasma.

In one embodiment, the method comprises annealing the composite structure after having allowed the composite composition to cure.

In one embodiment, the method comprises exposing the composite composition to vacuum prior to allowing the composite composition to cure to remove gas bubbles therefrom. In one embodiment, the gas which is removed from the composite composition is air, volatile components from the uncured composite composition, solvent vapors, or any mixture thereof.

In one embodiment, the composite composition is subjected to molding prior to allowing the composite composition to cure. The purpose of the molding is to form the composite composition to its desired final shape.

In one embodiment, the composite composition is subjected to injection molding or compression molding prior to allowing the composite composition to cure. The purpose of the injection molding or the compression molding is to form the composite composition to its desired final shape.

In one embodiment, the molten composite composition comprising thermoplastic material is subjected to injection molding or compression molding prior to allowing the composite composition to cure simultaneously as it cools down. The purpose of the injection molding or the compression molding is to form the composite composition to its desired final shape. In one embodiment, the composite composition comprising thermoplastic material is pelletized before being subjected to injection molding or compression molding. In one embodiment, the molten composite composition may be extruded to form a filament which may be suitable for use e.g. in 3D-printing applications.

In one embodiment, the magnetic filler material is selected from a group consisting of magnetic particles, magnetic fibres, pyrolytic graphite, and any combination or mixture thereof.

In one embodiment, the magnetic particles are of spherical, elliptical, rod-like, plate-like, dumbbell-like, or undefined shape. In one embodiment, the magnetic particles are magnetically modified fibres such as carbon fibres or glass fibres with magnetic modification on the surface, in the pores, or in the lumen in the case of hollow fibres.

The magnetic modification can be accomplished through deposition of magnetic particles or nanoparticles in different shapes (e.g. spherical, elliptical, rod-like, plate-like, dumbbell-like or undefined shape) or a continuous or partly continuous coating. A surface treatment, such as coating or plasma treatment or their combination, can be applied on the filler in order to ensure adhesion with the plastic resin.

The diameters of at least 90% of the magnetic particles are between 0.5 µm and 200 µm as determined by sieves. In one embodiment, the diameters of at least 90% of the magnetic particles are between 0.5 µm and 150 µm. In one embodiment, 0.5 µm - 20 µm. In one embodiment, the diameters of at least 90% of the magnetic particles are between 0.5 µm - 10 µm. In one embodiment, the diameters of at least 90% of the magnetic particles are between 0.5 µm - 5 µm.

The magnetic filler material (obtained after possible solvent exchange, and/or additional coating, and/or drying) is mechanically mixed or kneaded into the resin in its melted (for thermoplastics) or liquid, unhardened (for thermosets) state. In the case of a thermoplastic matrix, the dry filler or filler suspension can also be mixed with solid pellets of the thermoplastic.

In one embodiment, the composite composition comprises resin in an amount of 15 - 90 volume-%, or 2.5 - 60 weight-% based on the total amount of the composite composition.

In one embodiment, the composite composition comprises up to 80 weight-% of additional additives selected from a group consisting of reinforcements, tougheners, hardeners, softeners, thermoplastic filler to prompt self-healing, metal chelators to increase the magnetic performance of the composite, and any combinations thereof. The additional additives can be added to the resin before or after adding the magnetic filler.

In one embodiment, the composite composition comprises up 50 % of a hardener, and up to 60 % of additional additives selected from a group consisting of reinforcements, tougheners, softeners, thermoplastic filler to prompt self-healing, metal chelators to increase the magnetic performance of the composite, and any combinations thereof.

In one embodiment, when preparing a thermoset resin, the hardener is selected from a group consisting of anhydrides such as glutaric anhydride, phthalic anhydride, methyltetrahydrophthalic anhydride, hexahydrophthalic anhydride, tetrahydrophthalic anhydride, methyltetrahydrophthalic anhydride, methylhexahydrophthalic anhydride (e.g. hexahydro-4-methylphthalic anhydride), dodecenyl succinic anhydride, nadic anhydride, methyl nadic anhydride, trimellitic anhydride, maleic anhydride, pyromellitic dianhydride, benzophenone tetracarboxylic dianhydride, ethylene glycol bistrimellitate, glycerol tristrimellitate, endomethylene tetrahydrophthalic anhydride, methylendomethylene tetrahydrophthalic anhydride, methylbutenyl tetrahydrophthalic anhydride, succinic anhydride, methylcyclohexene dicarboxylic anhydride, (alkyl) styrenemaleic anhydride copolymer, chlorendic anhydride, polyazelaic polyanhydride, amines containing at least two amino groups, such as 3-aminomethyl-3,5,5-trimethylcyclohexylamine (i.e., isophoronediamine), polyoxypropylenediamine m-phenylenebis(methylamine), 4-methylcyclohexane-1,3-diamine, 2-methylcyclohexane-1,3-diamine, diethylene triamine, triethylene tetramine, tetraethylene pentamine, dipropylene triamine, diethylamino propylamine, N-aminoethylpiperazine, isophoronediamine, xylylenediamine, metaphenylene diamine, diaminodiphenylmethane, diaminodiphenylsulfone polyamides, polyphenols, organic acids, isocyanates, polymercaptans, and any mixtures thereof.

In one embodiment, the additional additives are selected from a group consisting of 4-tert-butylphenol, 5-amino-1,3,3-trimethyl cyclohexanecarbonitrile, Imidazoles such as 1-methylimidazole, 2-methylimidazole, 5-methylimidazole, 4-methylimidazole, 2-ethylimidazole, 2-ethyl-4-methylimidazole, 1-cyanoethyl-2-undecylimidazolium trimellitate or an epoxy-imidazole adduct (accelerator or co-curing agent), tertiary or secondary amines (accelerator or co-curing agent), transesterification catalysts, such as a metal (salt), sulfuric acid, hydrochloric acid, phosphoric acid, NaOH, KOH, carbonate, alkoxide, benzyldimethylamide, benzyltrimethylammonium chloride, Boric-acid esters, Lewis acids, organic metal compounds, organic metal salts, and mixtures thereof. When using a resin with ester or hydroxyl functions and an acid anhydride hardener, a transesterification catalyst may be used in order to improve the recyclability of the cured resin system.

In one embodiment, the composite composition may comprise other fillers e.g., reinforcements such as carbon fibers, carbon nanofiber, glass fibers, glass nanofibers, ceramic fibers, ceramic nanofibers, aramid fibers, aramid nanofibers, alumina fibers, alumina nanofibers, or any mixture thereof, tougheners such as ceramic particles or silicon particles, or metal chelators to increase the magnetic performance and filler-resin adhesion). These other or additional filler may be incorporated in the composite composition by mixing them with the resin system before, during or after the mixing with the magnetic fillers. A solvent or several can be added as a carrier for any or several of the additives. During or after mixing or both, the resin system can be exposed to vacuum in order to remove gas bubbles and possible solvent introduced with the magnetic and/or other filler(s). The gas bubbles removed may be air, other gases, or mixtures of gases.

If a thermoset resin is used in the composite composition, it may be cured into a chemical composition including cleavable bonds. This allows recycling after use, potentially so that both the resin and fillers can be recovered for reuse. Non-limiting examples of thermoset resins that are recyclable include epoxy resin with an amine-containing hardener, which form bonds that are cleavable under acidic conditions, epoxide or hydroxyl group-containing resin combined with acid anhydride or other ester-containing hardener, which undergo reversible transesterification, tetrafunctional diepoxide resin, where the epoxide groups are connected through a cleavable bond (such as an acetal group), with difunctional cyclic anhydride hardener, and a combination of furan- and maleimide-containing components, which undergo reversible Diels-Alder reaction. The hardeners resulting in a cured composite composition comprising cleavable chemical bonds may also be referred to as "dynamic hardeners".

Several resin matrices allowing intrinsic recyclability are known to a person skilled in the art. Recycling thermoplastics by re-melting is already well established. In addition, recyclable thermoset resins have been reported. Recycling can be done e.g. by reprocessing or recovery and reuse in a new material. When recycling, the composite structure may first be shredded and may then be exposed to the appropriate trigger (e.g. temperature or solvent) required to cleave it or transfer it into a re-moldable form. Subsequently, the composite structure can be dissolved or melted, and the magnetic filler materials separated from the dismantled resin matrix with a magnet or by filtration. Possible other fillers can also be separated or stay mixed with the resin. Alternatively, the resin system and magnetic fillers can stay mixed and just be reprocessed into a new form.

A composite structure comprising magnetic filler material obtained by the method described herein can be formed into the desired shape through known processing techniques used for forming or shaping plastic or composite materials. If the resin matrix is thermoplastic, the composite composition may be formed or shaped by injection molding or compression molding. As is known to a person skilled in the art, the choice of molding method will depend on many factors such as the consistency of the composite composition. Additional fillers (e.g., reinforcements such as carbon, glass, aramid, or alumina fibers or nanofibers, tougheners such as ceramic particles or silicon particles, or thermoplastic fillers such as poly(ethylene-co-methacrylic acid), poly(ethylene-co-glycidyl) methacrylate and ethylene vinyl acetate to prompt repairability and/or self-healing) can be added during the processing stage, e.g. by using the magnetically loaded composite composition as the plastic or resin component in techniques that involve addition of fibers, such as filament winding, pultrusion or resin transfer molding. If the filler is a continuous fiber, it can itself be processed with techniques like filament winding, pultrusion or resin transfer molding, using a resin with or without magnetic loading. Before processing into the final shape, the magnetically loaded composite composition can be made into a prepreg containing magnetic fibers, combination of magnetic particles and magnetic fibers or a combination of magnetic particles and non-magnetic fibers.

After forming into the final shape, the attained composite composition may be cured according to a procedure that is suitable for the applied resin to form the composite structure. The composite composition or composite structure can also be annealed at elevated temperature in order to improve its magnetic properties.
The composite can be cooled before and/or after the curing and/or after the annealing. The cooling can be done rapidly by immersing the composite or its container in liquid nitrogen or more slowly by refrigeration or freezing.

The composite can be pressed at least 400 MPa, or at least 500 MPa, or at least 600 MPa during and/or after curing and/or annealing. If the pressing is conducted after the curing and/or annealing, the sample can be exposed to the pressure while still hot and/or after cooling, for a total time of at least 15 min, or at least 20 min, or at least 25 min, or at least 30 min or as long as the curing, annealing, and/or cooling takes.

If the composite structure needs to be joined together with other composite parts with similar resin but different composition, these parts can be fused together by applying heating and pressure if their resin is thermoplastic or thermoset with a hardener that allows reprocessing. If the resin is thermoset, the parts can be joined together before curing in order for them to be fused together upon curing.

In one embodiment, the composite structure disclosed herein is used in applications requiring lightweight materials with magnetic properties and resistance to mechanical fatigue.

The composite structure disclosed herein and/or produced using the method disclosed herein is useful in applications requiring magnetic activity combined with low weight and/or effective junction between magnetic and composite parts. Examples include devices with active magnetic bearings (e.g., flywheels, turbogenerators and other rotating electrical machines), electromagnetic actuators applying force on composite parts as well as magnet-powered mobility systems, such as Hyperloop.

The method described in the current specification has the added utility of having properties suitable for the production of a magnetically loaded composite composition suitable for use in applications requiring lightweight materials with magnetic properties and resistance to mechanical fatigue.

In one embodiment, a composite structure produced according to the method of the present disclosure or a composite structure according to the present disclosure may withstand a tensile strength of 0.2 % strain for 10 000 cycles without breaking. In one embodiment, the composite structure can withstand a tensile strength of 0.5 % strain for 200 000 cycles without breaking. Previously, 45-vol-% loaded magnetic composites have been reported to fracture already after 17 cycles of up to 1% tensile strain, whereas neat epoxies can last even 1 000 000 cycles of cyclic stresses. As used herein, tensile strain means the length of an object in stretched state divided by its original length multiplied by 100%.

### LIST OF THE FIGURES

In the following, the invention is presented in detail by referring to the attached drawings, where:
Fig. 1 shows a flow chart of one embodiment of the method for producing a composite structure.
Fig. 2 shows the size distribution of 5 micron and 25 micron particles as determined by sieving.
Fig. 3 shows the cumulative size distribution of 200 micron particles as determined by sieve screen analysis.
Fig. 4 shows the relative permeability as a function of particle loading for different particle sizes.
Fig. 5 shows saturation magnetization Bmax as a function of particle loading for different particle sizes.
Fig. 6 shows hysteresis losses as a function of particle loading for different particle sizes.
Fig. 7 shows remanence as a function of particle loading for different particle sizes.
Fig. 8 shows normal coercivity as a function of particle loading for different particle sizes.
Fig. 9 shows intrinsic coercivity as a function of particle loading for different particles.
Fig. 10 shows the maximum energy product as a function of particle loading for different particle sizes.
Fig. 11 shows the specimen used for the measurement of tensile properties in Example 3.
Figs. 12 - 14 present the average stress-strain curves for carbonyl iron particles in DGEBA at varying loadings.
Fig. 15 shows the average stress-strain curves for carbonyl iron particles in DGEBA (example 1.2).
Fig. 16 shows the average stress-strain curves for elastomer-containing matrix without (Ref, solid line) and with (Fe75, dashed line) 75 wt-% / 30 vol-% carbonyl Fe particles.
Fig. 17 shows the average stress-strain curves for elastomer-containing matrix with varying loadings of carbonyl Fe particles (example 1.3.
Fig. 18 shows the average stress-strain curves for NdFeCoB particles in DGEBA (example 1.4).
Fig. 19 shows the average stress-strain curves for elastomer-containing matrix with varying loadings of NdFeCoB particles (example 1.5).

### DETAILED DESCRIPTION OF THE INVENTION

Reference will now be made in detail to various embodiments. The description below discloses some embodiments in such a detail that a person skilled in the art is able to utilize the embodiments based on the disclosure. Not all steps or features of the embodiments are discussed in detail, as many of the steps or features will be obvious for the person skilled in the art based on this specification.

### Example 1 - Preparing magnetic composite composition

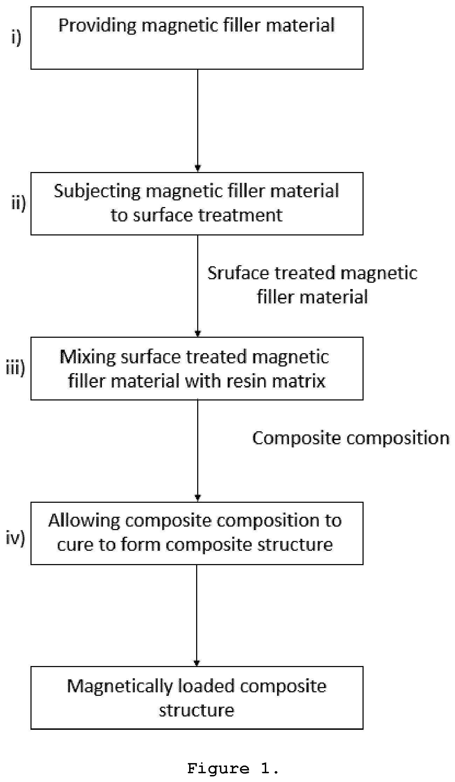

The process applied for producing the composite structures in this example is outlined in Figure 1.

### 1.1 Carbonyl iron fillers in DGEBA resin 1

100 g of Sika Biresin CR83 was manually mixed with 30 g of Sika Biresin CH83-6 hardener (modified polyamine). The total 130 g of the resin mixture was exposed to vacuum for approx. a minute in order to get the moisture and majority of the air bubbles out. The mixture was divided into two smaller pots (65 g + 65 g) to prevent the exothermic reaction from escalating. The two 65 g pots were heated in oven for 55 min at 50 °C to reach a suitable viscosity.

Carbonyl iron particles (spherical, diameter 5-9 µm as determined by sieves) were mixed with the epoxy mixture in correct amounts to attain a set of loadings specified in Table 1. Volumetric percentages refer to fractions in the cured composite and are calculated assuming a particle density of 7.9 g/cm³ and cured epoxy density of 1.2 g/cm³.

**Table 1.**

| Sample | Epoxy weight-% | Particles weight-% | Epoxy volume-% | Particles volume-% |
|---|---|---|---|---|
| Ref | 100 | 0 | 100 | 0 |
| Fe10 | 90 | 10 | 98.4 | 1.6 |
| Fe20 | 80 | 20 | 96.5 | 3.5 |
| Fe30 | 70 | 30 | 94.1 | 5.9 |
| Fe40 | 60 | 40 | 91.1 | 8.9 |
| Fe50 | 50 | 50 | 87.2 | 12.8 |
| Fe60 | 40 | 60 | 82.0 | 18.0 |
| Fe70 | 30 | 70 | 74.5 | 25.5 |
| Fe80 | 20 | 80 | 63.1 | 36.9 |

The powder-epoxy mixtures were manually mixed for 10 min to attain a visually homogenous mixture. The attained mixtures were poured to silicon molds. Possible air bubbles were removed from the bottom edge of the mold by following the edge with a thin metal needle. The extra resin was removed from the samples by sweeping the surface of the mold by a metal plate. This resulted in an equal amount of resin in each sample. The molded samples were initially cured for 24 h at room temperature in the mold, followed by final curing out of the mold at 70 °C for 5 h.

### 1.2 Carbonyl iron fillers in DGEBA resin 2

Sika Biresin CR144, anhydride hardener HY 917 and imidazol accelerator Huntsman DY070 were mixed in 100 : 88.77 : 1.8 wt:wt:wt ratio as follows: First the resin was exposed to vacuum to make sure that all the air was removed. The hardener was added and mixed for 25 min with a dispersion disk under vacuum. The accelerator was then added, and the vacuum mixing continued for 5-10 min. After that, carbonyl iron particles were added in alternative sizes and loadings specified in Table 2. Volumetric percentages refer to fractions in the cured composite and are calculated assuming a particle density of 7.7 g/cm3 and cured epoxy density of 1.2 g/cm3. The particle size indicated in Table 2 refers to the size of a sieve through which at least 80 % of the particles can pass.

**Table 2.**

| Partic le fracti on (wt%) | Resin fracti on (wt%) | Parti cle fract ion (vol% ) | Resin fract ion (vol% ) | Particle size as determined by sieves | | |
|---|---|---|---|---|---|---|
| | | | | Small: 5 µm | Medium: 44 µm | Large: 150 µm |
| 60 | 40 | 18.0 | 82.0 | Sample SS60 | Sample SM60 | Sample SL60 |
| 70 | 30 | 25.5 | 74.5 | Sample SS70 | Sample SM70 | Sample SL70 |
| 80 | 20 | 36.9 | 63.1 | Sample SS80 | Sample SM80 | Sample SL80 |

The particle size distribution of the small particles, determined by sieves, is as follows (percentages signify the proportion of particles below the indicated diameter in µm): 10 % = 2.078, 20 % = 2.570, 30 % = 2.943, 40 % = 3.288, 50 % = 3.641, 60 % = 4.033, 70 % = 4.507, 80 % = 5.151, 90 % = 6.260, and 95 % = 7.485.

The particle size distribution of the medium particles, determined by sieves, is as follows (percentages signify the proportion of particles below the indicated diameter in µm): 10 % = 15.69, 20 % = 21.26, 30 % = 25.34, 40 % = 28.75, 50 % = 31.95, 60 % = 35.20, 70 % = 38.92, 80 % = 43.69, 90 % = 51.71, and 95 % = 60.35.

After adding the particles, the vacuum mixing was continued for 10-20 min. The obtained dispersions were molded into plates in glass molds. The samples were placed in an oven preheated to 60 °C and cured according to the following program:
1. Heating from 60 to 90 °C at a ramp of 0.3 °C/min,
2. 4h at 90 °C,
3. Heating from 90 to 105 deg C at a ramp of 1 °C/min,
4. 2h at 105 °C,
5. Heating from 105 to 140 at a ramp of 1 °C/min, and
6. 4h at 140 °C.

Once the samples had cured, the sample shapes needed for testing were cut out of the cured plate.

### 1.3 Carbonyl iron fillers in elastomer-containing resin

West System G/flex 650-8 components A and B were manually mixed in a 1:1 vol/vol (1.2:2 w/w) ratio. The resin mixture was exposed to vacuum for approx. a minute or not. (Both vacuumed and non-vacuumed samples were tested and no significant difference found in mechanical performance.)

Carbonyl iron particles (spherical, diameter <10 µm as determined by sieves) were mixed with the epoxy mixture in correct amounts to attain a set of loadings specified in Table 3. Volumetric percentages refer to fractions in the cured composite and are calculated assuming a particle density of 7.8 g/cm³ and cured epoxy density of 1.1 g/cm³.

**Table 3.**

| Sample | Epoxy weight-% | Particles weight-% | Epoxy volume-% | Particles volume-% |
|---|---|---|---|---|
| Ref | 100 | 0 | 100 | 0 |
| Fe75 | 25 | 75 | 70 | 30 |
| Fe82.5 | 17.5 | 82.5 | 60 | 40 |
| Fe87.5 | 12.5 | 87.5 | 50 | 50 |

The powder-epoxy mixtures were manually mixed until attaining a visually homogeneous mixture. The ensuing mixtures were manually pushed to silicon molds. The molded samples were cured for 24 h at room temperature in the mold.

### 1.4 NdFeCoB fillers in in DGEBA resin

Sika Biresin CR144, anhydride hardener HY 917 and imidazol accelerator Huntsman DY070 were mixed with a dispersion disk under vacuum. NdFeCoB (26.4% Nd, 67.6% Fe, 5% Co, 1% B) plate-like particles were added in alternative sizes and loadings specified in Table 4 and the dispersion mixing under vacuum was continued. Volumetric percentages refer to fractions in the cured composite and are calculated assuming a particle density of 7.6 g/cm³ and cured epoxy density of 1.2 g/cm³.

**Table 4.**

| Partic le fracti on (wt%) | Resin fracti on (wt%) | Parti cle fract ion (vol% ) | Resin fract ion (vol% ) | Particle size | | | |
|---|---|---|---|---|---|---|---|
| | | | | Small (D50 = 5 µm) | Mediu m (D50 = 25 µm) | Medium-large epoxy-coated (D50 = <250 µm) | Large (D50 = <420 µm) |
| 60 | 40 | 18.5 | 81.5 | Sampl e HS60 | Sampl e HM60 | Sample HE60 | Sample HL60 |
| 70 | 30 | 26.1 | 73.9 | Sampl e HS70 | Sampl e HM70 | Sample HE70 | Sample HL70 |
| 80 | 20 | 37.7 | 62.3 | Sampl e HS80 | Sampl e HM80 | Sample HE80 | Sample HL80 |
| 82.5 | 17.5 | 42.5 | 57.5 | Sampl e HS82. 5 | Sampl e HM82. 5 | Sample HE82.5 | Sample HL82.5 |

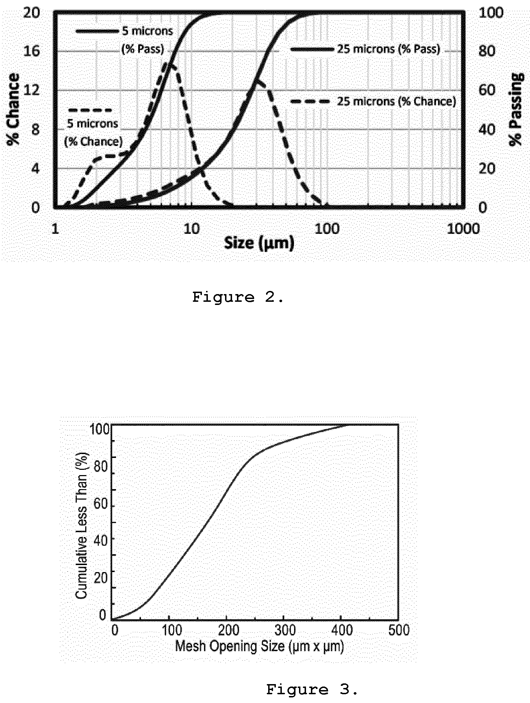

The particle size distribution of the small and medium-sized particles, determined by sieves, are shown in Figure 2 (from manufacturer).

The particle size distribution of the large particles, determined by sieves, are shown in Figure 3 (from manufacturer).

The obtained dispersions were molded into plates in glass molds. The samples were cured as in Example **1.1.** Once the samples had cured, the sample shapes needed for testing were cut out of the cured plate.

Samples were similarly prepared also out of a corresponding medium-large NdFeCoB with an epoxy coating (coated by manufacturer). Its particle size is specified in the table below. Essentially, most of the particles were between sizes 89-250 µm.

**Table 5.**

| Screen Analysis Specification | |
|---|---|
| Total > 60 Mesh (250 × 250 µm opening) | < 2 wt-% |
| Total > 170 Mesh (89 × 89 µm opening) | > 65 wt-% |
| Total < 270 Mesh (53 × 53 µm opening) | < 15 wt-% |
| Total < 325 Mesh (43 × 43 µm opening) | < 8 wt-% |

### 1.5 NdFeCoB fillers in elastomer-containing resin

West System G/flex 650-8 components A and B were manually mixed in a 1:1 vol/vol (1.2:2 w/w) ratio. NdFeCoB (26.4% Nd, 67.6% Fe, 5% Co, 1% B) particles (plate-like, diameter <420 µm as determined by sieves) were mixed with the epoxy mixture in correct amounts to attain a set of loadings specified in Table 6. Volumetric percentages refer to fractions in the cured composite and are calculated assuming a particle density of 7.6 g/cm³ and cured epoxy density of 1.1 g/cm³.

**Table 6.**

| Sample | Epoxy weight-% | Particles weight-% | Epoxy volume-% | Particles volume-% |
|---|---|---|---|---|
| Ref | 100 | 0 | 100 | 0 |
| Nd75 | 25 | 75 | 70 | 30 |
| Nd82.5 | 17.5 | 82.5 | 60 | 40 |
| Nd87.5 | 12.5 | 87.5 | 50 | 50 |

The powder-epoxy mixtures were manually mixed until attaining a visually homogeneous mixture. The ensuing mixtures were manually pushed to silicon molds. The molded samples were cured for 24 h at room temperature in the mold.

### 1.6 Plasma-treated carbonyl iron fillers in elastomer-containing resin

75-90 g batch of carbonyl iron particles (spherical, diameter <10 µm as determined by sieves) was treated for 3 min with air plasma on a petri dish followed by mixing. The treatment and mixing were repeated 5 times to attain a total treatment time of 15 min. Three batches were combined (total weight 251.52 g) and mixed with 36 g pre-mixed G/Flex epoxy mixture (components A and B in a 1:1 vol/vol or 1.2:2 w/w ratio), to attain a particle-epoxy ratio of 1:1 vol/vol or 87.5:12.5 w/w. The particle-epoxy mixture was manually mixed until attaining a visually homogenous mixture. The ensuing mixtures were manually pushed to silicon molds. The molded samples were cured for 24 h at room temperature in the mold.

### 1.7 Carbonyl nickel fillers in DGEBA resin

Sika Biresin CR131 was manually mixed with Sika Biresin CH135-8 hardener in a 100:21 w/w (100:26 v/v) ratio. Carbonyl nickel powder (spherical, porous particle, diameter <5 µm as determined by sieves) was manually mixed with the epoxy mixture in a 50:50 v/v powder:epoxy ratio. The epoxy-particle mixture was poured into a silicon mould. The samples were cured in the mould, first at room temperature overnight and then at 140 °C for 8 hours.

### 1.8 Fe₃O₄ fillers in DGEBA resin

Magnetite (Fe₃O₄) particles were prepared by coprecipitation of Fe²⁺ and Fe³⁺ as follows: 12.9 g of anhydrous FeCl₂ (102 mmol) and 35.25 g (217 mmol) of anhydrous FeCl₃ were dissolved in 600 ml deionized water in order to attain an approx. 1:2 molar ratio of Fe²⁺ and Fe³⁺. The solution was stirred for 45 min at 80 °C. Subsequently, 150 ml of 25% ammonia aqueous solution was added under vigorous stirring. Stirring at 80 °C was continued for another 30 min. Finally, 15 g of citric acid mixed with 30 ml water was added to the solution and stirring was continued for 90 min at 95 °C.

The particles were washed by centrifugation or dialysis as follows:
Centrifugation: the sample was first centrifuged once, and the supernatant discarded. The precipitate was mixed with deionized water and stirred for 30 min before centrifuging again. The supernatant was discarded, and the precipitate dried in ambient air.

Dialysis: Excess water was decanted off the sample. Subsequently, it was placed in a dialysis tube and dialyzed against deionized water until reaching a pH of 7. After removing the sample from the tube, it was dried in ambient air.

The magnetite particles were embedded in epoxy as follows:
Sika Biresin CR131 was manually mixed with Sika Biresin CH135-8 hardener in a 100:21 w/w (100:26 v/v) ratio. Magnetite particles washed by dialysis were added to attain a 50:50 wt:wt particle:epoxy ratio. The epoxy-particle mixture was poured into a silicon mould. The samples were cured in the mould at 140 °C for 8 hours.

### 1.9 Magnetite-coated carbon fibre fillers in elastomer-containing resin

Magnetite electrodeposition on carbon fibre was conducted as follows:
256 mg of recycled carbon fibre veil (grammage 30 g/m²) was cut into 8 pieces of approximately 52 mm x 18 mm. The pieces were stacked and connected to the negative pole of a voltage source, while a steel electrode was connected to the positive pole. Both the electrodes were immersed in an aqueous solution of 0.5 M FeCl₂ and 0.5 M FeCl₃ (pH 1). A voltage of 1.2 V was applied for 2 h.

After the electrodeposition, the pieces weighed 587 mg, implying a 129% increase in mass through addition of 331 mg of magnetite. Part of this was cut off when forming the pieces suitable for embedding, leaving approximately 300 mg of magnetite in the veils that were embedded in elastomer-containing resin as follows:
West System G/flex 650-8 components A and B were manually mixed in a 1.75:1 vol/vol (2.1:1 w/w) ratio. The magnetite-coated carbon fibre veil pieces were dipped in the mixture and manually pressed into a mould and cured overnight at room temperature.

### Example 2 - Magnetic properties of composite composition

The magnetic properties of the magnetic composite structures prepared according to Examples 1.2 and 1.4 were tested on specimens shaped as plates of 10mm × 10mm × 1mm, using the Permagraph method. Firstly, the sample is magnetized in an external field. Secondly, the sample is exposed to an opposing external field and its demagnetization measured as a function of the opposing field strength. For soft magnetic composites (example 1.2), a full hysteresis loop was measured, fully inversing the external field followed by returning it to the original one.

The relative magnetic permeability of the soft magnetic composites (example 1.2) was estimated as the approximate maximum slope of the magnetic flux density (B) - magnetic field strength (H) curve. The slope was approximated by dividing the magnetic flux density at a field strength of 100 kA/m with 100 kA/m and the permeability of vacuum.

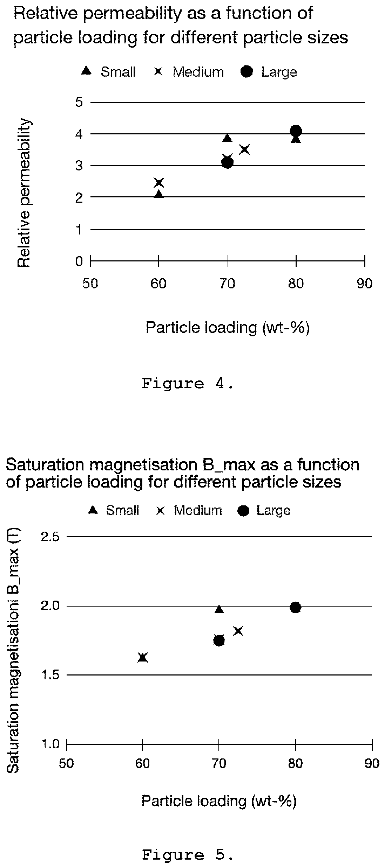

The estimated relative permeability as a function of particle loading in the figure below. As seen in Figure 4, the permeability increased as a function of particle loading, without being much influenced by the particle size. The most permeable samples were obtained with small particles at 70 and 80 weight-% loadings as well as the large particle at 80 weight-% loadings (relative permeability ~4).

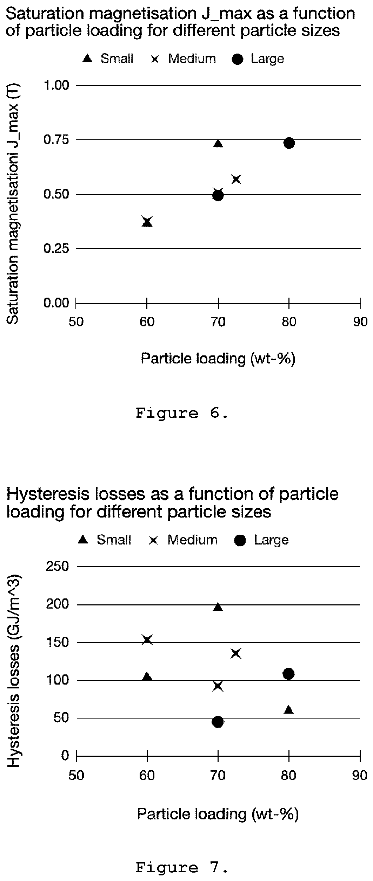

A similar trend was observed in saturation magnetization, which was determined as the largest magnetic flux density attained during the test. The results of the saturation magnetization tests are presented in Figure 5 and Figure 6. Note that in Figure 5 and Figure 6, data points overlap for small and medium particle at 60 wt-%; for medium and large particle at 70 wt-%; and for small and large particle at 80 wt-%.

The hysteresis losses were calculated as the area inside the hysteresis loop. As seen in Figure 7, the losses decreased with increasing particle loading, apart from an exception with small particle at 70 weight-% loading with remarkably high losses. The lowest losses occurred with a small particle at a loading of 80 weight-%.

In conclusion, the magnetically best-performing soft magnetic composites (highest permeability, saturation magnetization and lowest hysteresis losses) where attained by using small (80 % of particles <5 µm) or large (150 µm) particle with a loading of 80 weight-%.

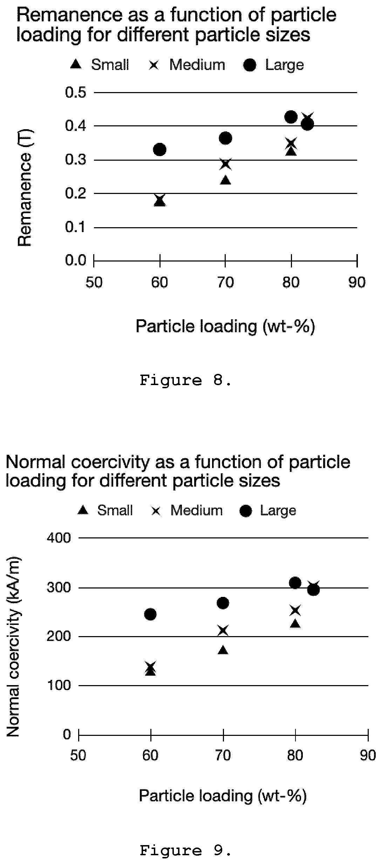

The remanence (i.e. residual magnetism) for hard magnetic composites (example 1.4) is presented in Figure 8. Remanence expresses how much magnetic flux remains in the material after complete removal of the external field and can thus be considered as a measure of the ability of the magnetic material to retain its magnetization. As seen in the figure below, the remanence tends to increase with particle size and loading.

A similar trend was observed in normal coercivity. This implied that when the magnetized samples were exposed to an increasing external field opposing their magnetization, the more and the larger particles were included, the larger opposing field was needed to eliminate the total net magnetic field (i.e., superposition of the external field and the sample's own field). The normal coercivity of the samples is presented in Figure 9.

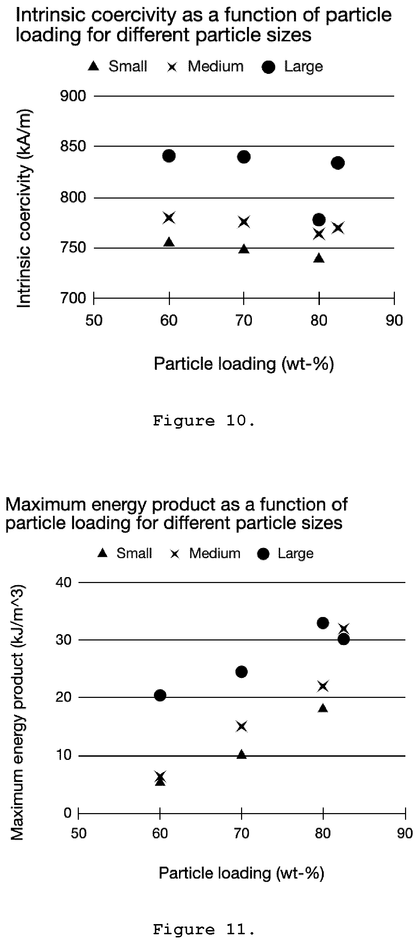

In contrast, the intrinsic coercivity was discovered to be close to independent of particle size and loading, close to 800 kA/m for each sample, apart from a slight drop at a loading of 80 weight-%. This implies that all the samples had close to equal capability to resist demagnetization, see Figure 10.

Maximum energy product (i.e., the maximum value of the product of magnetic flux density B, in T, and magnetic field strength H, in kA/m) also increased with particle size and loading, as seen in Figure 11.

In conclusion, the magnetically best-performing hard magnetic composites (highest remanence, normal coercivity and maximum energy product) where attained by using large (up to 420 µm) particles with a loading of 80-82.5 weight-% or medium (median 25 µm) particles with a loading of 82.5 weight-%. For the particle with epoxy coating (end of example 1.4) with a loading of 80 weight-%, the magnetic properties were similar to the best-performing uncoated particles: remanence 0.429 T, normal coercivity 309 kA/m, intrinsic coercivity 788 kA/m and maximum energy product 33.2 kJ/m³.

### Example 3 - Mechanical properties of composite composition

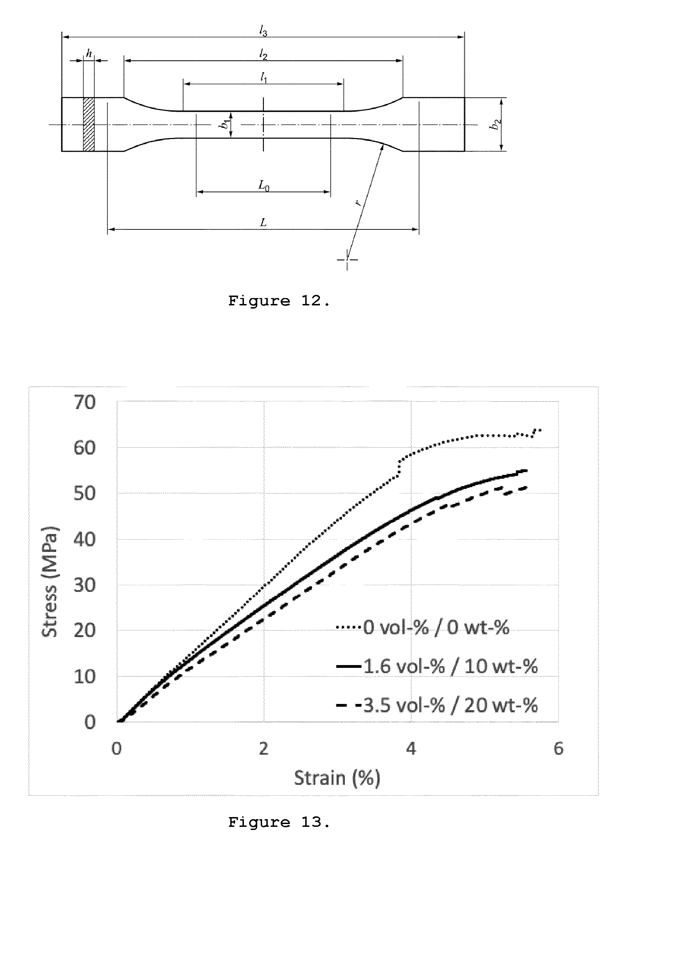

The tensile strength of the magnetic composite structures prepared according to Example 1 were tested on specimens shaped according to specimen type 1A (for examples 1.1, 1.3 and 1.5) or type 1B (for examples 1.2 and 1.4) in EN ISO 527-2 Plastics. Determination of tensile properties. Part 2: Test conditions for moulding and extrusion plastics. Only the gauge length L₀ and the initial distance between grips L differed from the standard, as specified in Table 7. Specimen dimensions are shown in Figure 12 and table 7 below.

**Table 7.**

| Symbol in Figure 12 | Dimension | Length in mm, examples 1.1, 1.3 and 1.5 | Length in mm, examples 1.2 and 1.4 |
|---|---|---|---|
| l₃ | Overall length | 170 | 150 |
| l₁ | Length of narrow parallel-sided portion | 80 | 60 |
| r | Radius | 24 | 60 |
| l₂ | Distance between broad parallel-sided portions | 109.3 | 108 |
| b₂ | Width at ends | 20 | 20 |
| b₁ | Width at narrow portion | 10 | 10 |
| h | Thickness | 4 | 4 |
| L₀ | Gauge length | 90 | 50 |
| L | Initial distance between grips | 90 | 110 |

Tensile tests were carried out at a temperature of 24 °C and relative humidity of 50%. The gauge length was 90 mm, test speed 1 mm/min and load cell 5 kN (for examples 1.1, 1.3 and 1.5) or 10 N (for examples 1.2 and 1.4). The stress applied on pulling the sample was measured as a function of the tensile strain. (EN ISO 527-2 Type 1B)

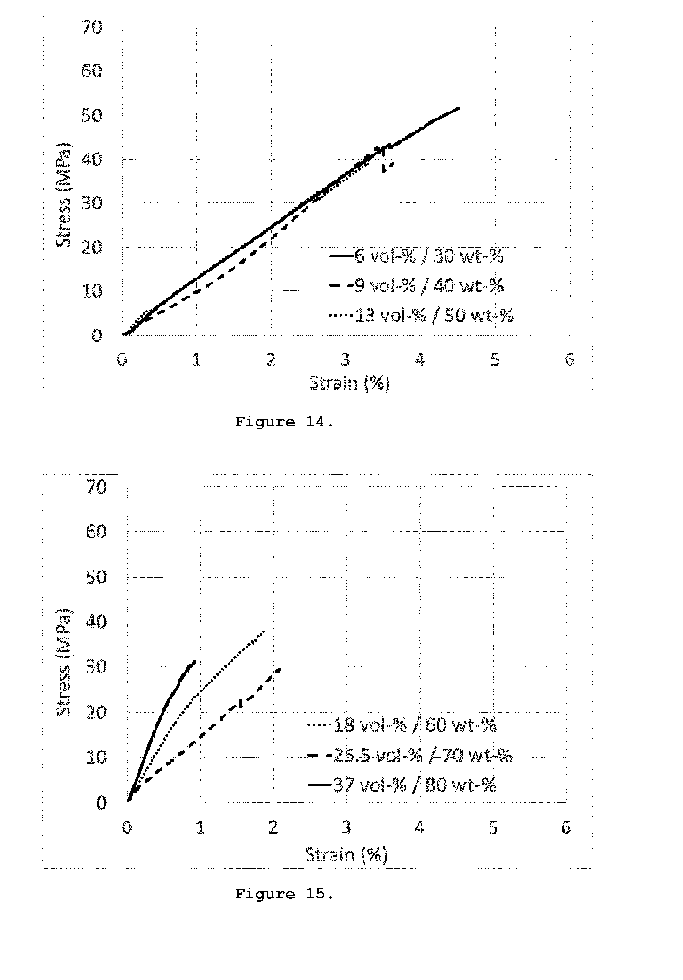

Averaged stress-strain curves for soft magnetic composites with DGEBA 1 (example 1.1) are presented in Figures 13 - 15. The plateaus at strains below 0.7 % are artefacts due to slippage and not to be considered as part of the curves as seen in these figures, the maximum tensile strain is ~4 % or higher for particle loadings up to 50 weight-% (13 volume-%). At 60 weight-%, the max. strain drops to ~2 % at 60-70 weight-% (18-25.5 volume-%) and further down to ~1 % at 80 weight-% (37 volume-%). As seen in example 2, a composite with nearly similarly sized soft magnetic particle and a loading of 60 weight-% has a relative magnetic permeability of only half of that of a similar composite with 70-80 weight-% loading. Moreover, the saturation magnetization at 60 weight-% was ~20% lower than at 70-80 weight-%. As such, it is preferable to use a loading of 70-80 weight-% (25.5-37 volume-%).

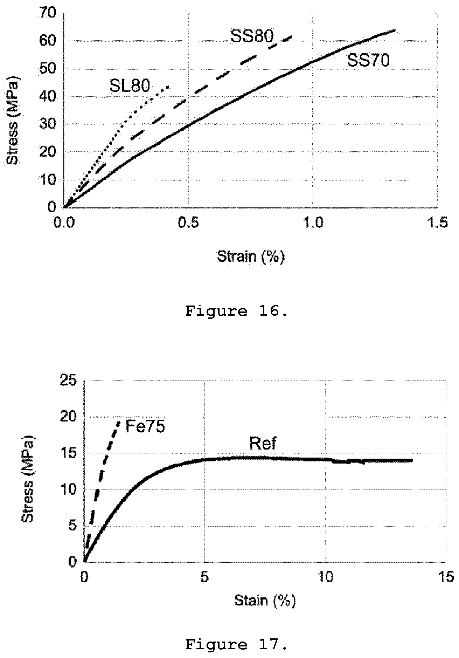

The averaged stress-strain curves of the magnetically best-performing soft magnetic composites with DGEBA 2 (example 1.2) are summarized in Figure 16. In the figure, sample codes follow Table 2; i.e., S70 and S80 refer to small particle (80 % of particles <5 µm) at 70 and 80 wt-% loadings, respectively, and L80 to large particle (150 µm) at 80 wt.-% loading.

As seen in Figure 16, increasing the particle loading makes the composite stiffer and more brittle. This effect is increased further by enlarging the particle size. Therefore, in order to balance the magnetic properties with mechanical ones, it is preferable to use a small particle. For the small particle, both loadings of 70 and 80 weight-% are satisfactory. However, 80 weight-% (37 volume-%) provides lower magnetic hysteresis losses (see example 2), whereas 70 weight-% (25.5 volume-%) provides more ductility (higher tensile strength maximum tensile strain).

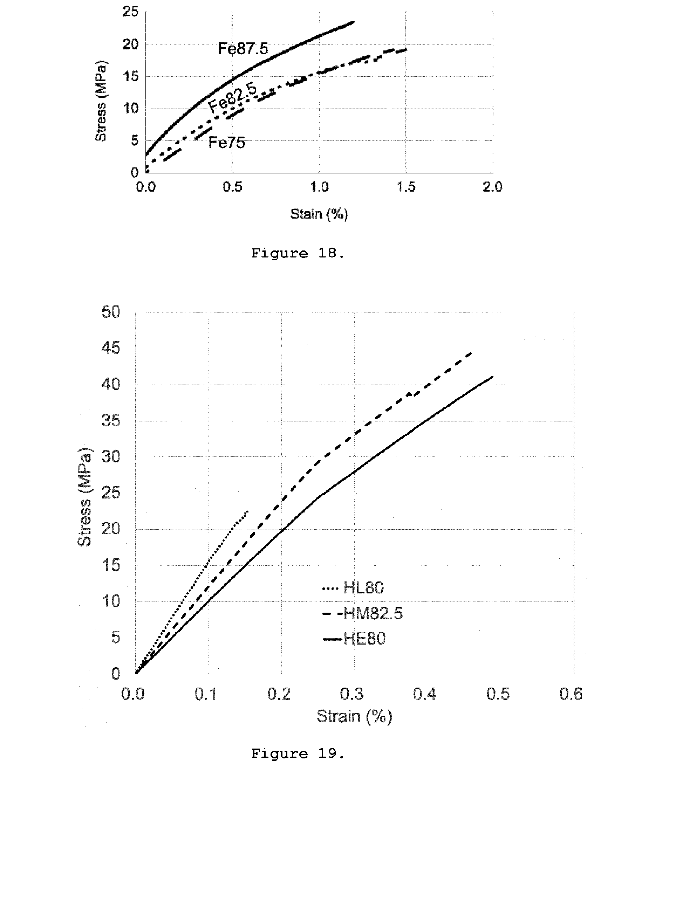

Stress-strain curves for soft magnetic composites with elastomer (example 1.3) are presented in Figures 16 and 17. Figure 17 presents the average stress-strain curves for elastomer-containing matrix without (Ref, solid line) and with (Fe75, dashed line) 75 wt-% / 30 vol-% carbonyl Fe particles. Figure 18 presents the average stress-strain curves for elastomer-containing matrix with varying loadings of carbonyl Fe particles (example 1.3): 75 wt-% / 30 vol-% dashed line; 82.5 wt-% / 40 vol-% dotted line; 87.5 wt-% / 50 vol-% solid line. As seen in Figure 18, the matrix is highly elastic, and adding magnetic particles in it drops its maximum tensile strain below 8% of the reference sample without particles. When comparing different magnetic particle loadings (Figure 18), the amount of particles is seen to have little influence on the ductility. Based on the magnetic performance of samples with a different matrix but similar or lower particle loadings (example 2), the samples are all expected to have a satisfactory magnetic performance.

Figure 19 shows the average stress-strain curves for the magnetically best-performing hard magnetic composites (example 1.4). In Figure 19, sample codes follow Table 4; i.e., HL80 and HE80 refer to a 80 wt-% loading of large (<420 µm) and medium-large (<250 µm) epoxy-coated particles, respectively, whereas HM82.5 refers a 82.5 wt-% loading of medium (D50 = 25 µm) particles.

Figure 19 shows that, even though the large NdFeCoB particle at a loading of 80 weight-% (37.7 volume-%) performs magnetically well, it makes the composite mechanically brittle (HL80 in Figure 19). The brittleness can be decreased by using a smaller particle with an epoxy coating (HE80 in Figure 19). Similar improvement can also be attained when decreasing the particle size further (HM82.5 in Figure 19).

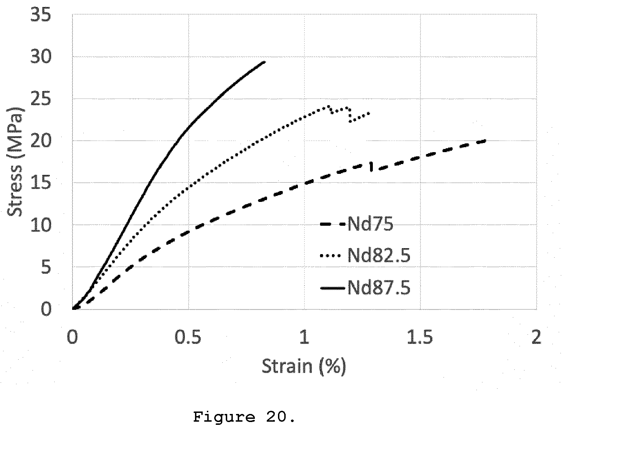

The average stress-strain curves for hard magnetic composites with elastomer (example 1.5) are presented in Figure 20. In Figure 20, sample codes follow Table 6. As seen in Figure 20, when increasing the loading from 30 volume-% (75 weight-%) to 40 volume-% (82.5 weight-%) to 50 volume-% (87.5 weight-%), the max. strain decreases from 2.4 % to 1.8 % to 1 %.

The embodiments described hereinbefore may be used in any combination with each other. Several of the embodiments may be combined together to form a further embodiment. A method, a composite structure, or a use, disclosed herein, may comprise at least one of the embodiments described hereinbefore. It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items. The term "comprising" is used in this specification to mean including the feature(s) or act(s) followed thereafter, without excluding the presence of one or more additional features or acts.

## Claims

1. Method for producing a composite structure comprising magnetic filler material embedded in a resin matrix, ***characterized* in that** the method comprises:
- providing the magnetic filler material wherein the magnetic filler material is a hard magnetic filler material selected from a group consisting of Nd, Nd₂Fe₁₃CoB, Nd₇Fe₄B₃, SmCo₅, Sm₂Co₇, Sm₂Co₁₇, Fe₂O₅Sr₂, SrFeO₂, SrFeO₃, SrFe₁₂O₁₉, BaFe₁₂O₁₉ and any mixtures thereof or a soft magnetic material selected from a group consisting of Fe, Co, Ni, mu-metal such as Ni₇₇Fe₁₇Cu₅Mo, Ni₇₆Fe₁₇Cu₅Cr₂, or Ni₈₁Fe₁₆Mo₃, Ni₄Fe, Ni₃Fe, CoNi, Co₂Ni₃, Co₃Ni₂, Co₄Ni, FeCo, Fe₇Co₃, Fe₅₁Co₄₉, Fe₅₁Co₄₇V₂, Co₈FeNi, NiFe₂O₄, CoFe₂O₄, MnZnFe₄O₈, or NiZnFe₄O₈;
- subjecting the magnetic filler material to a surface treatment for improving the adhesion of the magnetic filler material to the resin matrix in the composite structure, wherein the surface treatment is selected from plasma treatment and/or coating of the magnetic filler material;
- mixing the surface treated magnetic filler material with the resin to form a composite composition, wherein the composite composition comprises magnetic filler material in an amount of at least 10 volume-% based on the total volume of the composite composition;
- exposing the composite composition to vacuum to remove gas bubbles therefrom; and
- allowing the composite composition to cure to form the composite structure.

2. The method of claim 1, wherein allowing the composite composition to cure comprises subjecting the composite composition to exposure to a hardener, heating, irradiation with UV or visible light, or exposure to a solvent.

3. The method of any one of the preceding claims, wherein the method comprises annealing the composite structure after having allowed the composite composition to cure.

4. The method of any one of the preceding claims, wherein prior to allowing the composite composition to cure, the composite composition is subjected to injection molding or compression molding.

5. The method of any one of the preceding claims, wherein the surface treatment is a plasma treatment performed by exposing the magnetic filler material to plasma to generate bondable chemical groups on the surface of the magnetic filler material.

6. The method of any one of the preceding claims, wherein the surface treatment is the application of a coating on the magnetic filler material by immersing the magnetic filler material in a solution comprising a complexing agent or by preparing the magnetic filler material in the presence of a complexing agent.

7. The method of any one of the preceding claims, wherein the coating is applied during the filler preparation by exposing the filler to the complexing agent during or after the precipitation of the magnetic particles or deposition of the magnetic coating.

8. The method of claim 7, wherein the complexing agent is selected from a group consisting of citric acid, malic acid, glutaric acid, oleic acid, and phthalocyanine, or a compound containing both a hydroxyl group and an amine group, or amines containing at least two amino groups, diaminodiphenylsulfone polyamides, polyphenols, organic acids, isocyanates, polymercaptans, or any mixtures thereof.

9. The method of any one of the preceding claims, wherein the composite composition comprises magnetic filler material in an amount of at least 20 volume-%, or at least 30 volume-%, or at least 35 volume-%, or at least 40 volume-%, or at least 45 volume-%, or at least 50 volume-% based on the total volume of the composite composition.

10. The method of any one of the preceding claims, wherein the composite composition comprises magnetic filler material in an amount that is 20 - 70 volume-%, or 30 - 60 volume-%, or 45-55 volume-% based on the total volume of the composite composition.

11. The method of any one of claims 1 or 3-10, wherein the resin matrix comprises or consists of a thermosetting resin or a thermoplastic resin.

12. The method of any one of the preceding claims, wherein the magnetic filler material is selected from a group consisting of magnetic particles, magnetic fibres, pyrolytic graphite, and any combination or mixture thereof.

13. The method of claim 12, wherein the magnetic particles are of spherical, elliptical, rod-like, plate-like, dumbbell-like, or undefined shape.

14. The method of any one of the preceding claims, wherein the composite composition comprises resin in an amount of 2.5 - 60 weight-% based on the total amount of the composite composition.

15. The method of any one of the preceding claims, wherein the composite composition comprises up to 60 % of additional additives selected from a group consisting of reinforcements, tougheners, hardeners, softeners, thermoplastic fillers to prompt self-healing, metal chelators to increase the magnetic performance of the composite, and any combinations thereof.

16. A composite structure comprising magnetic filler material embedded in a resin matrix obtainable by the method of any one of claims 1 - 15.

17. Use of the composite structure of claim 16 in devices with active magnetic bearings such as flywheels, turbogenerators and other rotating electrical machines, electromagnetic actuators applying force on composite parts as well as magnet-powered mobility systems, such as Hyperloop.

## Patentansprüche

1. Verfahren zum Produzieren einer Verbundstruktur, umfassend ein in einer Harzmatrix eingebettetes magnetisches Füllmaterial, **dadurch gekennzeichnet, dass** das Verfahren Folgendes umfasst:
- Bereitstellen des magnetischen Füllmaterials, wobei das magnetische Füllmaterial ein hartmagnetisches Füllmaterial ist, das aus einer Gruppe bestehend aus Nd, Nd₂Fe₁₃CoB, Nd₇Fe₄B₃, SmCo₅, Sm₂Co₇, Sm₂Co₁₇, Fe₂O₅Sr₂, SrFeO₂, SrFeO₃, SrFeO₁₂O₁₉, BaFe₁₂O₁₉ und beliebigen Mischungen davon ausgewählt ist oder ein weichmagnetisches Füllmaterial ist, das aus einer Gruppe bestehend aus Fe, Co, Ni, mu-metal, so wie Ni₇₇Fe₁₇Cu₅Mo, Ni₇₆Fe₁₇Cu₅Cr₂, oder Ni₈₁Fe₁₆MO₃, Ni₄Fe, Ni₃Fe, CoNi, Co₂Ni₃, Co₃Ni₂, Co₄Ni, FeCo, Fe₇Co₃, Fe₅₁Co₄₉, Fe₅₁Co₄₇V₂, Co₈FeNi, NiFe₂O₄, CoFe₂O₄, MnZnFe₄O₈, oder NiZnFe₄O₈ ausgewählt ist;
- Unterziehen des magnetische Füllmaterials einer Oberflächenbehandlung zur Verbesserung der Adhäsion des magnetischen Füllmaterials an der Harzmatrix in der Verbundstruktur, wobei die Oberflächenbehandlung ausgewählt ist aus einer Plasmabehandlung und/oder einer Beschichtung des magnetischen Füllmaterials;
- Mischen des oberflächenbehandelten magnetischen Füllmaterials mit dem Harz, um eine Verbundstruktur zu bilden, wobei die Verbundstruktur magnetisches Füllmaterial in einer Menge von mindestens 10 Vol.-% basierend auf dem Gesamtvolumen der Verbundstruktur, umfasst;
- Aussetzen der Verbundstruktur einem Vakuum, um Gasblasen daraus zu entfernen;
- Erlauben, dass die Verbundzusammensetzung aushärtet, um die Verbundstruktur zu bilden.

2. Verfahren nach Anspruch 1, wobei das Erlauben der Verbundstruktur auszuhärten umfasst, dass die Verbundzusammensetzung einem Härter ausgesetzt wird, erwärmt wird, mit UV- oder sichtbarem Licht bestrahlt wird oder einem Lösungsmittel ausgesetzt wird.

3. Verfahren nach einem der vorhergehenden Ansprüche, wobei das Verfahren das Annealen der Verbundstruktur umfasst, nachdem man der Verbundstruktur erlaubt hat, auszuhärten.

4. Verfahren nach einem der vorhergehenden Ansprüche, wobei vor dem Erlauben des Aushärtens der Verbundstruktur die Verbundstruktur einem Spritzgießverfahren oder einem Formpressverfahren unterzogen wird.

5. Verfahren nach einem der vorhergehenden Ansprüche, wobei die Oberflächenbehandlung eine Plasmabehandlung ist, die durchgeführt wird, indem das magnetische Füllmaterial Plasma ausgesetzt wird, um bindungsfähige chemische Gruppen auf der Oberfläche des magnetischen Füllmaterials zu erzeugen.

6. Verfahren nach einem der vorhergehenden Ansprüche, wobei die Oberflächenbehandlung das Aufbringen einer Beschichtung auf das magnetische Füllmaterial durch Eintauchen des magnetischen Füllmaterials in eine Lösung, die einen Komplexbildner umfasst, oder durch Vorbereiten des magnetischen Füllmaterials in Gegenwart eines Komplexbildners ist.

7. Verfahren nach einem der vorhergehenden Ansprüche, wobei die Beschichtung während der Vorbereitung des Füllstoffs aufgebracht wird, indem der Füllstoff während oder nach der Präzipitation der magnetischen Partikel oder dem Aufbringen der magnetischen Beschichtung dem Komplexbildner ausgesetzt wird.

8. Verfahren nach Anspruch 7, wobei der Komplexbildner aus einer Gruppe bestehend aus Zitronensäure, Apfelsäure, Glutarsäure, Ölsäure und Phthalocyanin, oder einer Verbindung, die sowohl eine Hydroxylgruppe als auch eine Aminogruppe enthält, oder Aminen, die mindestens zwei Aminogruppen enthalten, Diaminodiphenylsulfone, Polyamide, Polyphenole, organische Säuren, Isocyanate, Polymercaptane oder beliebige Mischungen davon ausgewählt ist.

9. Verfahren nach einem der vorhergehenden Ansprüche, wobei die Verbundstruktur magnetisches Füllmaterial in einer Menge von mindestens 20 Vol.-%, oder mindestens 30 Vol.-%, oder mindestens 35 Vol.-%, oder mindestens 40 Vol.-%, oder mindestens 45 Vol.-%, oder mindestens 50 Vol.-%, basierend auf dem Gesamtvolumen der Verbundstruktur, umfasst.

10. Verfahren nach einem der vorhergehenden Ansprüche, wobei die Verbundstruktur magnetisches Füllmaterial in einer Menge umfasst, die 20 bis 70 Vol.-%, oder 30 bis 60 Vol.-%, oder 45 bis 55 Vol.-%, basierend auf dem Gesamtvolumen der Verbundstruktur, beträgt.

11. Verfahren nach einem der Ansprüche 1 oder 3-10, wobei die Harzmatrix ein wärmehärtbares Harz oder ein thermoplastisches Harz umfasst oder daraus besteht.

12. Verfahren nach einem der vorhergehenden Ansprüche, wobei das magnetische Füllmaterial aus einer Gruppe bestehend aus magnetischen Partikeln, magnetischen Fasern, pyrolytischem Graphit und einer beliebigen Kombination oder Mischung davon ausgewählt ist.

13. Verfahren nach Anspruch 12, wobei die magnetischen Partikel kugelförmige, elliptische, stabförmige, plattenförmige, hantelförmige oder undefinierte Formen aufweisen.

14. Verfahren nach einem der vorhergehenden Ansprüche, wobei die Verbundstruktur Harz in einer Menge von 2,5 bis 60 Gew.-%, basierend auf der Gesamtmenge der Verbundstruktur, umfasst.

15. Verfahren nach einem der vorhergehenden Ansprüche, wobei die Verbundstruktur bis zu 60 % zusätzliche Additive umfasst, die aus einer Gruppe bestehend aus Verstärkern, Zähigkeitsmitteln, Härtungsmitteln, Weichmachern, thermoplastischen Füllstoffen, um Selbstheilung zu bewirken, Metallchelatbildnern, um die magnetische Leistung des Verbundstoffs zu erhöhen, und beliebigen Kombinationen davon ausgewählt sind.

16. Verbundstruktur, umfassend ein in einer Harzmatrix eingebettetes magnetisches Füllmaterial, die durch das Verfahren nach einem der Ansprüche 1 - 15 erhältlich ist.

17. Verwendung der Verbundstruktur nach Anspruch 16 in Vorrichtungen mit aktiven Magnetlagern wie Schwungrädern, Turbogeneratoren und anderen rotierenden elektrischen Maschinen, elektromagnetischen Aktuatoren, die Kraft auf Verbundteile ausüben, sowie magnetisch angetriebenen Mobilitätssystemen wie Hyperloop.

## Revendications

1. Procédé de production d'une structure composite comprenant un matériau de remplissage magnétique intégré dans une matrice de résine, ***caractérisé* en ce que** le procédé comprend :
- la fourniture du matériau de remplissage magnétique dans lequel le matériau de remplissage magnétique est un matériau de remplissage magnétique dur sélectionné dans un groupe consistant en Nd, Nd₂Fe₁₃COB, Nd₇Fe₄B₃, SmCo₅, Sm₂Co₇, Sm₂Co₁₇, Fe₂O₅Sr₂, SrFeO₂, SrFeO₃, SrFe₁₂O₁₉, BaFe₁₂O₁₉ et tout mélange de ceux-ci ou un matériau magnétique mou sélectionné dans un groupe consistant en Fe, Co, Ni, mu-métal tel que Ni₇₇Fe₁₇Cu₅Mo, Ni₇₆Fe₁₇Cu₅Cr₂, or Ni₈₁Fe₁₆Mo₃, Ni₄Fe, Ni₃Fe, CoNi, Co₂Ni₃, Co₃Ni₂, Co₄Ni, FeCo, Fe₇CO₃, Fe₅₁Co₄₉, Fe₅₁Co₄₇V₂, Co₈FeNi, NiFe₂O₄, CoFe₂O₄, MnZnFe₄O₈, ou NiZnFe₄O₈ ;
- le fait de soumettre le matériau de remplissage magnétique à un traitement de surface pour améliorer l'adhérence du matériau de remplissage magnétique à la matrice de résine dans la structure composite, dans lequel le traitement de surface est sélectionné parmi un traitement au plasma et/ou un revêtement du matériau de remplissage magnétique ;
- le mélange du matériau de remplissage magnétique traité en surface avec la résine pour former une composition composite, dans lequel la composition composite comprend un matériau de remplissage magnétique en une quantité d'au moins 10 % en volume sur la base du volume total de la composition composite ;
- l'exposition de la composition composite à du vide pour retirer les bulles de gaz de celle-ci ; et
- le fait de laisser la composition composite durcir pour former la structure composite.

2. Procédé selon la revendication 1, dans lequel le fait de laisser la composition composite durcit comprend le fait de soumettre la composition composite à une exposition à un agent de durcissement, à du chauffage, à une irradiation par UV ou lumière visible, ou une exposition à un solvant.

3. Procédé selon l'une quelconque des revendications précédentes, dans lequel le procédé comprend le recuit de la structure composite après avoir laissé durcir la composition composite.

4. Procédé selon l'une quelconque des revendications précédentes, dans lequel, avant de laisser la composition composite durcir, la composition composite est soumise à un moulage par injection ou un moulage par compression.

5. Procédé selon l'une quelconque des revendications précédentes, dans lequel le traitement de surface est un traitement au plasma mis en œuvre en exposant le matériau de remplissage magnétique à un plasma afin de générer des groupes chimiques pouvant être liés sur la surface du matériau de remplissage magnétique.

6. Procédé selon l'une quelconque des revendications précédentes, dans lequel le traitement de surface est l'application d'un revêtement du matériau de remplissage magnétique en immergeant le matériau de remplissage magnétique dans une solution comprenant un agent complexant ou en préparant le matériau de remplissage magnétique en présence d'un agent complexant.

7. Procédé selon l'une quelconque des revendications précédentes, dans lequel le revêtement est appliqué pendant la préparation d'agent de remplissage en exposant l'agent de remplissage à l'agent complexant pendant ou après la précipitation des particules magnétiques ou le dépôt du revêtement magnétique.

8. Procédé selon la revendication 7, dans lequel l'agent complexant est sélectionné dans un groupe consistant en acide citrique, acide malique, acide glutarique, acide oléique et phtalocyanine, ou un composé contenant à la fois un groupe hydroxyle et un groupe amine, ou des amines contenant au moins deux groupes amino, des polyamides de diaminodiphénylsulfone, des polyphénols, des acides organiques, des isocyanates, des polymercaptans, ou tout mélange de ceux-ci.

9. Procédé selon l'une quelconque des revendications précédentes, dans lequel la composition composite comprend un matériau de remplissage magnétique en une quantité d'au moins 20 % en volume, ou d'au moins 30 % en volume, ou d'au moins 35 % en volume, ou d'au moins 40 % en volume, ou d'au moins 45 % en volume, ou d'au moins 50 % en volume, sur la base du volume total de la composition composite.

10. Procédé selon l'une quelconque des revendications précédentes, dans lequel la composition composite comprend un matériau de remplissage magnétique en une quantité qui fait 20 à 70 % en volume, ou 30 à 60 % en volume, ou 45 à 55 % en volume sur la base du volume total de la composition composite.

11. Procédé selon l'une quelconque des revendications 1 ou 3 à 10, dans lequel la matrice de résine comprend ou consiste en une résine thermodurcissable ou une résine thermoplastique.

12. Procédé selon l'une quelconque des revendications précédentes, dans lequel le matériau de remplissage magnétique est sélectionné dans le groupe consistant en particules magnétiques, fibres magnétiques, graphite pyrolytique, et toute combinaison ou tout mélange de ceux-ci.

13. Procédé selon la revendication 12, dans lequel les particules magnétiques sont de forme sphérique, elliptique, de type tige, de type plaque, d'haltère ou indéfinie.

14. Procédé selon l'une quelconque des revendications précédentes, dans lequel la composition composite comprend une résine en une quantité de 2,5 à 60 % en poids sur la base de la quantité totale de la composition composite.

15. Procédé selon l'une quelconque des revendications précédentes, dans lequel la composition composite comprend jusqu'à 60 % d'additifs supplémentaires sélectionnés dans un groupe consistant en renforts, solidifiants, durcissants, adoucisseurs, agents de remplissage thermoplastiques pour inciter à l'auto-cicatrisation, chélateurs métalliques pour augmenter la performance magnétiques du composite, et toute combinaison de ceux-ci.

16. Structure composite comprenant un matériau de remplissage magnétique intégré dans une matrice de résine pouvant être obtenue par le procédé selon l'une quelconque des revendications 1 à 15.

17. Utilisation de la structure composite selon la revendication 16 dans des dispositifs avec des paliers magnétiques actifs tels que des volants d'inertie, turbogénérateurs et autres machines électriques rotatives, actionneurs électromagnétiques appliquant une force sur des pièces composites ainsi que des systèmes de mobilité à alimentation par aimant, tels que Hyperloop.
